# EUROPÄISCHE PATENTSCHRIFT

(11) **EP 2 229 917 B1**
(45) Veröffentlichungstag und Bekanntmachung des Hinweises auf die Patenterteilung: **02.05.2012**
(21) Anmeldenummer: 09004015.5
(22) Anmeldetag: 20.03.2009
(51) Int. Cl.: A61C 17/22

(54) **Elektrische Zahnbürste und Verfahren zur Herstellung einer elektrischen Zahnbürste**
Electric toothbrush and method for producing same
Brosse à dents électrique et procédé de fabrication d'une brosse à dents électrique

(43) Veröffentlichungstag der Anmeldung: 22.09.2010
(73) Patentinhaber: Braun GmbH, 61476 Kronberg/Taunus (DE)
(72) Erfinder: Greve, Oliver, 65779 Kelkheim (DE); Tretrop, Uwe, 64546 Mörfelden-Walldorf (DE); Faranda, Leo, 63110 Rodgau (DE); Junk, Christian, 61462 Königstein (DE); Ansari, Petra, 65779 Kelkheim (DE)

(56) Entgegenhaltungen:
- EP-A1- 1 657 485
- WO-A1-2004/030891
- DE-U1- 29 908 517
- US-A1- 2002 100 134
- US-A1- 2004 143 920
- US-A1- 2005 034 256
- US-A1- 2005 053 895
- US-A1- 2005 271 997
- US-B1- 6 202 242
- US-B2- 6 954 961

## Beschreibung

Die vorliegende Erfindung betrifft eine elektrische Zahnbürste nach dem Oberbegriff des Anspruchs 1 und ein Verfahren zur Herstellung einer solchen Zahnbürste. Elektrische Zahnbürsten weisen oft in einem Gehäuseabschnitt des Handstückes eine Lichtquelle auf, die den Benutzer über einen bestimmten Betriebszustand der Zahnbürste unterrichten soll. Zur Anzeige über den Ladezustand eines Akkumulators im Handstück ist es beispielsweise bekannt, eine LED am Gehäuse aufleuchten zu lassen.

Aus der WO 92/13499 ist eine elektrische Zahnbürste bekannt, die eine Lichtquelle in einem oberen Bereich des Handstücks aufweist. Als Lichtquelle dient hierbei eine LED, die im Gehäuse des Handstücks der elektrischen Zahnbürste unmittelbar befestigt ist. Aus der WO 2004/030891 A1 und aus der US 2005/0271997 A1 sind weitere elektrische Zahnbürsten mit einer Lichtquelle bekannt.

Aus der US-6,954,961 ist eine elektrische Zahnbürste der eingangs genannten Art bekannt, mit der eine Vielzahl von LEDs eingesetzt werden, um eine Beleuchtung über den Umfang des Handstückes zu erreichen. Ein solches Konzept ist jedoch in der mechanischen, elektrischen und optischen Umsetzung nur sehr aufwendig realisierbar. In einer Variante ist aus der US-6,954,961 bekannt, die Lichtquellen dann zu aktivieren, wenn eine bestimmte Andruckkraft auf den Bürstenkopf während des Zähneputzens ausgeübt wird.

Von der Firma Braun ist weiterhin eine elektrische Zahnbürste bekannt, die eine externe Anzeigeeinrichtung aufweist, um verschiedene Betriebszustände der Zahnbürsten und deren Handhabung beim Zähneputzen zu visualisieren. Hierbei ist ebenfalls ein LCD-Display vorgesehen, an dem ein Symbol angezeigt und eine Leuchtdiode aktiviert wird, sobald ein bestimmter Anpressdruck des Bürstenkopfes während des Zähneputzens detektiert wird. Diese Maßnahmen zur Warnung vor zu hohem Anpressdruck des Bürstenkopfes auf den Zahn sollen verhindern, dass ein Anpressdruck ausgeübt wird, der über das zur Plaqueentfernung Nötige hinausgeht.

Ein nicht Teil der Nutzergruppen von elektrischen Zahnbürsten putzt jedoch zumindest abschnittsweise die Zähne mit geschlossenen Augen, um während des Zähneputzens zu entspannen. Es hat sich gezeigt, dass die bekannten Anzeigemöglichkeiten von Betriebszuständen während des Zähneputzens für diese Nutzergruppe mit geschlossenen Augen nicht wahrgenommen werden. Auch Menschen mit Sehbehinderungen können diese optisch angezeigten Warnungen vor zu hohem Anpressdruck schlecht wahrnehmen.

Es ist daher eine Aufgabe der vorliegenden Erfindung, eine elektrische Zahnbürste der eingangs genannten Art bereitzustellen, die eine optische Anzeigeeinrichtung aufweist, die auch mit geschlossenen Augen ohne Weiteres während des Zähneputzens wahrnehmbar ist und die vibrationssicher und unaufwendig im Handstück vorgesehen ist. Es ist ferner eine Aufgabe der vorliegenden Erfindung, ein Verfahren zur Herstellung einer solchen Zahnbürste bereitzustellen.

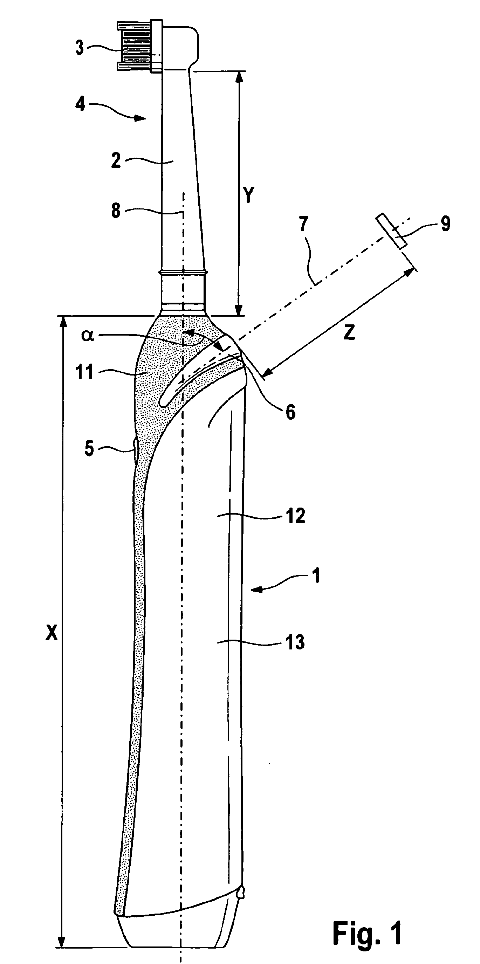

Diese Aufgabe wird bezüglich der elektrischen Zahnbürste mit den Merkmalen des Anspruchs 1 gelöst. Dadurch, dass die Lichtquelle derart ausgebildet ist, dass die von dieser emittierte Lichtintensität 50 bis 2500 µW/sr und/oder die Lichtstärke 20 bis 500 mcd beträgt, ist gewährleistet, dass bei gleichzeitiger Positionierung der Lichtquelle an einem oberen Bereich des Handstücks in allen üblichen Handhabungspositionen während des Zähneputzens mit dieser Zahnbürste die Lichtquelle im Falle einer Aktivierung auch mit geschlossenen Augen noch deutlich wahrnehmbar ist. Die Messwerte beziehen sich auf einen Messabstand von 5 cm oberhalb der Lichtquelle benachbart zum Handstück auf der optischen Achse der LED (siehe auch Fig. 1). Bekannte Zahnbürsten emittieren mit Ihren LED's eine blendfreie Lichtintensität von 2 bis 10 µW/sr und eine Lichtstärke von 0,2 bis 6 mcd unter gleichen Messbedingungen.

In vorteilhafter Weiterbildung ist die Lichtquelle derart ausgebildet, dass die von der Lichtquelle emittierte Lichtintensität 150-2000 µW/sr und/oder die Lichtstärke 100-450 mcd (bei einer beliebigen sichtbaren Farbe des Lichtes) beträgt. Auch diese Werte beziehen sich auf den gleichen obigen Messort der Lichtintensität und der Lichtstärke. Durch diese Ausbildung der Lichtquelle ist eine optimale Wahrnehmung mit geschlossenen Augen möglich.

In weiterer vorteilhafter Ausbildung schließt die optische Achse der Lichtquelle, insbesondere der LED, mit der Antriebsachse, insbesondere der Antriebswelle bzw. der Antriebseinheit, einen spitzen Winkel von vorzugsweise 0 bis 80°, insbesondere von 30 bis 60° oder weiter bevorzugt von 40 bis 50°, ein. Damit ist eine Beleuchtungsrichtung definiert, die in den meisten Positionen während des Zähneputzens zum Auge des Benutzers und zum Reinigungskopfende der Zanbürste hin zugewandt ist.

In weiterer Ausbildung ist als Lichtquelle eine LED und ein Lichtleitelement vorgesehen. Insbesondere bei der Ausbildung nur einer einzigen LED, die mit einem Lichtleitelement am Gehäuse zusammenwirkt, ist ein elektrisch und mechanisch weniger aufwendiger Aufbau vorgegeben, der dennoch eine Lichtabstrahlung in einem größeren Bereich um das Handstück herum ermöglicht.

In weiterer vorteilhafter Ausbildung ist die Lichtquelle, insbesondere die LED, auf der zum Betriebsschalter gegenüberliegenden Seite des Gehäuses angeordnet. Der Betriebsschalter - in der Regel ist dies ein Ein-/Ausschalter oder ein Taster oder eine Bedieneinrichtung, mit der verschiedene Betriebsmodi der elektrischen Zahnbürste aktivierbar sind - ist vorzugsweise auf der gleichen Seite der elektrischen Zahnbürste angeordnet, auf der sich auch der Bürstenkopf befindet. Die LED bzw. die Lichtquelle ist demgegenüber auf der gegenüberliegenden Seite, also auf der zum Bürstenkopf abgewandten Seite, angeordnet. Dies gewährleistet einerseits ebenfalls eine bessere Erkennung der Aktivierung der Lichtquelle bei geschlossenen Augen und erlaubt darüber hinaus eine bessere Erkennung, falls der Nutzer mit geöffneten Augen vor einem Spiegel die Zähne putzt.

In weiterer vorteilhafter Ausbildung ist das Lichtleitelement als transparenter oder transluzenter Kunststoffkörper ausgebildet. Durch die separate Ausbildung eines Lichtleitelementes als Kunststoffkörper, unabhängig von einer LED, ergeben sich nicht nur vorteilhafte Befestigungsmöglichkeiten des Lichtleitelementes und der LED, mit der die elektrischen Leitungen der LED weniger den Vibrationseinflüssen der vibrierenden Antriebseinrichtung ausgesetzt sind, sondern erlauben auch eine Gestaltung des Lichtleitelementes, die einen umfassenden Abstrahlungs-Raumwinkel der Lichtquelle am Handstück erlaubt.

In weiterer vorteilhafter Ausbildung ist das Lichtleitelement als länglich, gekrümmter Körper, vorzugsweise mit U- oder Bananenform, ausgebildet. Eine derartige geometrische Ausgestaltung des Lichtleitelementes erlaubt eine vorteilhafte Weiterleitung des Lichtes in das Lichtleitelement, so dass dieses von mehreren Seiten am Handstück erkennbar ist. Eine Erkennbarkeit der Lichtquelle von mehreren Seiten des Handstückes auch bei einer Nutzung des Handstücks unmittelbar in Gesichtsnähe ist bei gleichzeitiger Verwendung nur einer einzigen LED wünschenswert, auch wenn dies mit einer LED alleine, ohne ein Lichtleitelement, nicht erzielbar ist.

In weiterer vorteilhafter Ausbildung weist der optische Außenkörper der LED eine teils nach innen geformte Kontur des Strahlkörpers auf. Eine solche Außenkontur bildet eine Streufläche, an der das von der LED abgegebene Licht nicht nur entlang der optischen Achse mit einem bestimmten Öffnungswinkel, sondern auch seitlich, insbesondere in Lotrichtung zur optischen Achse, gestreut und abgestrahlt wird. Dies erlaubt eine effizientere Einleitung und Ausleuchtung des Lichtleitelementes in dessen Seiten hinein. Dieser Effekt ist noch verstärkbar, indem ein Bereich am Lichtleitelement direkt oberhalb der LED in Verlängerung von dessen optischer Achse weniger lichtdurchlässig ist als ein dazu benachbarter Bereich des Lichtleitelementes.

In weiterer vorteilhafter Ausbildung ist die LED an einer inneren Baugruppe des Handstücks befestigt. Vorteilhafterweise ist die LED nicht direkt am Gehäuse befestigt. Diese vom Außengehäuse entkoppelte Befestigung der LED erlaubt eine bessere Montierbarkeit der LED am Handstück und eine vibratorisch entkoppelte Befestigung relativ zur Antriebseinheit, die bei einer elektrischen Zahnbürste in der Regel sehr stark vibriert und somit die elektrischen Verbindungsleitungen der LED zu einer Kontrolleinrichtung / Platine beschädigen kann.

In weiterer vorteilhafter Ausbildung weist die innere Baugruppe ein erstes und ein zweites Chassisteil auf. Das erste Chassisteil nimmt die Energiequelle, die Antriebseinheit und die Kontrolleinrichtung auf. Das zweite Chassisteil weist die LED und eine elektrische Leitung zur LED auf. Ein solcher Aufbau erlaubt eine flexiblere Lagerung der LED durch eine flexiblere Anbindung des zweiten Chassisteils an der inneren Baugruppe. Dies stellt sicher, dass die elektrische Leitung zur LED durch die Vibrationen der Antriebseinheit nicht geschädigt wird und insbesondere die Verbindungsstellen der elektrischen Leitung zur LED und zur Kontrolleinrichtung unbeeinträchtigt bleiben.

In weiterer vorteilhafter Ausbildung ist das zweite Chassisteil an einer elektrischen Leiterplatte der Kontrolleinrichtung mechanisch und elektrisch verbindbar. Bevorzugt wird das zweite Chassisteil direkt auf die elektrische Leiterplatte der Kontrolleinrichtung durch eine Schnapp-oder Rastverbindung mechanisch verbunden, wobei die elektrischen Leitungen der LED dabei in der Nähe von elektrischen Kontakten auf der elektrischen Leiterplatte fixiert sind. Durch ein weiteres Anlöten dieser elektrischen Leitung der LED an der elektrischen Leiterplatte ist auch die elektrische Verbindung sicher hergestellt.

In weiterer vorteilhafter Ausbildung ist die LED an einem Kunststoffspritzgußteil, das als zweites Chassisteil vorgesehen ist, befestigt. Das Kunststoffspritzgußteil kann beispielsweise aus POM oder einem anderen Hartkunststoff gebildet sein. Auch ein Weichkunststoff kann hierfür vorgesehen sein. Das Kunststoffspritzgußteil bildet ein flexibles Chassisteil, das die in das Chassisteil potentiell eingeleiteten Vibrationen flexibel federt, ohne die LED oder die elektrischen Leitungen durch die Vibrationen zu beschädigen.

In weiterer vorteilhafter Ausbildung weist das zweite Chassisteil eine ringförmige Umklammerung an der Antriebseinheit als oberes, zweites Befestigungsmittel an der inneren Baugruppe auf. Damit ist bevorzugt das Chassisteil einerseits im unteren Bereich auf der elektrischen Leiterplatte aufgeschnappt und im oberen Bereich ringförmig um die Antriebswelle herum aufgesteckt. Dies ermöglicht eine flexible Lagerung des Chassisteils, ohne dass die Schnappverbindung im unteren Bereich oder die elektrische Lötverbindung durch die Vibrationen getrennt wird.

In weiterer vorteilhafter Ausbildung ist die Lichtquelle, insbesondere das Lichtleitelement, von einem Weichkunststoff eingegrenzt bzw. seitlich am Gehäuse umgeben. Bevorzugt ist das Lichtleitelement am Hartkunststoffkörper vorgesehen und seitlich dichtend mit Weichkunststoff umspritzt. Als Weichkunststoff eignet sich insbesondere ein Elastomer, wie z.B. ein thermoplastisches Elastomer (TPE).

Die obige Aufgabe wird ebenfalls durch ein Verfahren mit den Merkmalen des Anspruchs 15 gelöst. Demgemäß wird zunächst das Gehäuse des Handstücks durch Spritzgießen mit einer ersten, vorzugsweise harten Kunststoffkomponente hergestellt. Das separat gespritzte Lichtleitelement wird auf einer Tragstruktur der ersten Kunststoffkomponente des Gehäuses montiert. In einem dritten Schritt wird dies so vorbereitete Gehäuse des Handstückes wieder in das Spritzgußwerkzeug eingelegt und eine zweite Kunststoffkomponente, insbesondere eine Weichkunststoffkomponente, auf das Gehäuse gespritzt. Dabei ist der Rand des Lichtleitelementes vollständig von der Weichkunststoffkomponente, also der zweiten Kunststoffkomponente, umgeben. Dadurch ist eine abgedichtete Einbettung des Lichtleitelementes im Gehäuse gewährleistet.

In alternativer Ausführungsform wird zur Herstellung einer elektrischen Zahnbürste nach dem Oberbegriff des Anspruchs 1 die erste Kunststoffkomponente des Gehäuses des Handstücks, vorzugsweise die Hartkomponente, spritzgegossen. Dann wird eine zweite transparente oder transluzente Komponente als Lichtleitelement an die erste Komponente angespritzt. In einem dritten Spritzgießschritt wird optional eine weitere Kunststoffkomponente als Hart- oder Weichkunststoff an das Gehäuse des Handstückes angespritzt. Diese alternative Ausführungsform, die ebenfalls unabhängig von den anderen Merkmalen beanspruchbar ist, kann auch mit nur zwei Komponenten ausgebildet sein.

Die Aufgabe wird weiterhin durch ein Verfahren mit den Merkmalen des Anspruchs 17 gelöst. Dies sieht die folgenden Herstellschritte vor: Herstellen des Gehäuses mit dem Lichtleitelement und Einsetzen einer inneren Baugruppe mit Antriebseinheit, Energiequelle und einer LED in das Gehäuse. Die innere Baugruppe wird dabei derart in das rohrförmige Gehäuse eingesetzt, dass die LED unterhalb des Lichtleitelements positioniert ist, so dass die LED und das Lichtleitelement zusammen die Lichtquelle bilden. Hierbei wird das Gehäuse im Spritzgießverfahren hergestellt, wobei das Lichtleitelement entweder in einem Zwischenschritt anmontiert oder angespritzt wurde. Eine solche Vorgehensweise ermöglicht eine Montage der elektrischen Zahnbürste, bei der weder die LED noch deren elektrischen Zuleitungen beschädigt werden.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen:
- FIG. 1: eine Seitenansicht der elektrischen Zahnbürste nach der Erfindung;
- FIG. 2: eine perspektivische Darstellung der inneren Baugruppe des Handstücks der Zahnbürste nach FIG. 1;
- FIG. 3: eine perspektivische Darstellung des zweiten Chassisteiles der Zahnbürste nach FIG. 1;
- FIG. 4: eine Draufsicht auf die Lichtquelle der Zahnbürste nach FIG. 1;
- FIG. 5: eine Schnittdarstellung entlang der Linie A-A durch die Lichtquelle nach FIG. 4;
- FIG. 6: eine schematische Darstellung des Lichtemissionsverhaltens der LED der Zahnbürste nach FIG. 1;
- FIG. 7: eine perspektivische Darstellung eines Teils des Handstück-Gehäuses und des Lichtleitelementes in unmontiertem Zustand der Zahnbürste nach FIG. 1;
- FIG. 8: eine perspektivische Darstellung des Handstück-Gehäuses mit montiertem Lichtleitelement der Zahnbürste nach FIG. 1;
- FIG. 9: eine Teildarstellung der Vorderansicht des Handstücks der Zahnbürste nach FIG. 1;
- FIG. 10: eine schematische Darstellung der Zahnbürste nach FIG. 1 beim Zähneput- zen mit geschlossenen Augen des Benutzers und aktivierter Lichtquelle;
- FIG. 11: eine schematische Darstellung der Zahnbürste nach FIG. 1 in einer zweiten Position beim Zähneputzen mit geschlossenen Augen des Benutzers und ak- tivierter Lichtquelle, und
- FIG. 12: eine schematische Darstellung der Zahnbürste nach FIG. 1 in einer dritten Position mit geschlossenen Augen des Benutzers und aktivierter Lichtquelle.

FIG. 1 zeigt eine elektrische Zahnbürste mit einem Handstück 1, das sich von einem unteren Ende bis zu einem angrenzenden Hals 2 erstreckt (siehe Länge des Handstücks X in FIG. 1). Auf das Handstück 1 ist eine auswechselbare Ersatzbürste 4 aufgesteckt, die einen Hals 2 und einen Reinigungskopf 3 an deren oberen Ende aufweist. Der Hals 2 erstreckt sich über die Länge Y in FIG. 1. Das Handstück 1 weist ferner einen Betriebsschalter 5 auf, mit dem die Zahnbürste ein- und ausgeschaltet sowie ggfs. in verschiedene Betriebsmodi versetzt werden kann. Der Betriebsschalter 5 ist auf der gleichen Seite der elektrischen Zahnbürste angeordnet wie der Reinigungskopf 3. Auf der gegenüberliegenden Seite zum Betriebsschalter 5 und Reinigungskopf 3 ist die Lichtquelle 6 am Handstück 1 angeordnet. Die Lichtquelle 6 ist in einem oberen Bereich des Handstücks 1 direkt benachbart zur Ersatzzahnbürste 4 oberhalb des Betriebsschalters 5 angeordnet. In FIG. 1 ist nur die Erstreckung der Lichtquelle auf der dargestellten Seite und der zum Betriebsschalter abgewandten Seite erkennbar. Durch die symmetrische Ausgestaltung der Lichtquelle 6 ist diese jedoch auf der nicht dargestellten, rückwärtigen Seite der Zahnbürste ebenso vorgesehen. Die Lichtquelle 6 umfasst eine LED 10, die sich im Inneren des Handstücks 1 befindet und nicht selbst aus dem Handstück heraustritt. In FIG. 1 ist ferner die optische Achse 7 der LED 10 dargestellt, die etwa in einem Winkel von 45° relativ zur Längsachse der Antriebseinheit bzw. zu deren Antriebsachse 8 geneigt ist. Der Winkel α kann in einem Bereich von 0 bis 80° variieren. Somit ist eine Abstrahlungsrichtung der Lichtquelle von der das Handstück 1 umschließenden Hand weg und zum Gesicht des Benutzers hin vorgesehen. An der Austrittsstelle des von der Lichtquelle 6 emittierten Lichtes entlang der optischen Achse 7 der LED 10 in einer Distanz z von 5 Zentimetern kann mit einem Lichtmessgerät 9 die Lichtintensität und die Lichtstärke gemessen werden. In dieser Ausführungsform ist eine Lichtstärke von 330 mcd an der in FIG. 1 angegebenen Lichtmessgeräteposition feststellbar. Die LED nach dieser Ausführungsform emittiert im roten Wellenbereich bei 632 nm. Die an der Messstelle gemessene Lichtintensität beträgt bei dieser Ausführungsform 1600 µW/sr. Sowohl die Farbe der emittierten Lichtstrahlung der LED 10 als auch die Lichtstärke und die Lichtintensität können variiert werden (siehe zur Bandbreite der Variationsmöglichkeiten von Lichtstärke und Lichtintensität (auch unabhängig voneinander) die beanspruchten Angaben). Das Handstück 1 besteht aus einer Hartkunststoffkomponente 12 (in der Figur weißlich dargestellt) und einer Weichkunststoffkomponente aus TPE 11 (in der Figur grau markiert dargestellt). Die TPE-Komponente ist unmittelbar angrenzend an die Kontur der Lichtquelle 6 angespritzt, so dass die Lichtquelle 6 wasserdicht eingeschlossen ist.

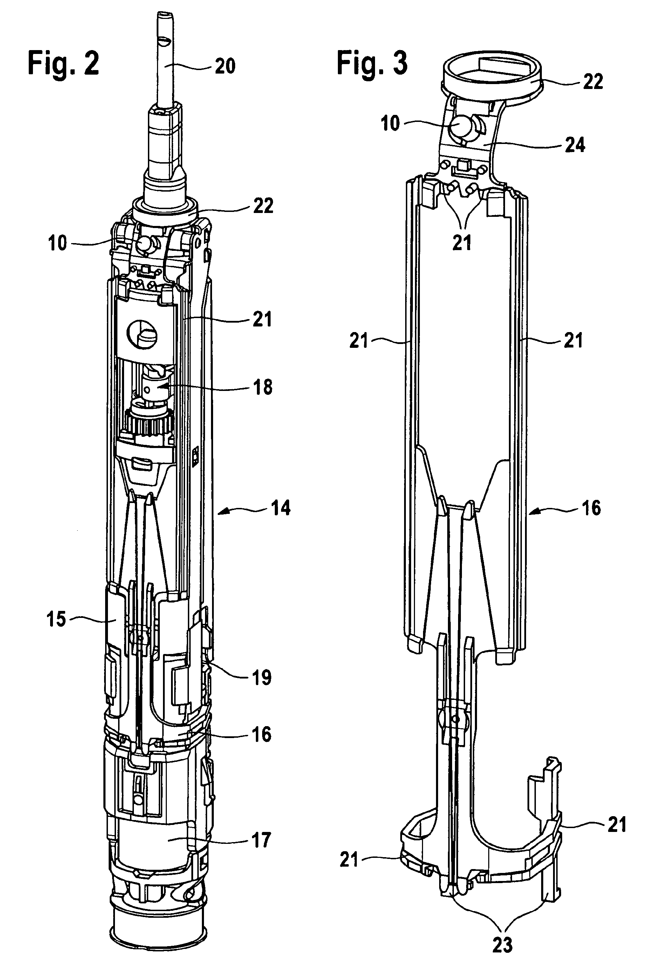

FIG. 2 zeigt die innere Baugruppe 14, die in das rohrförmige Gehäuse 13 des Handstücks 1 eingesetzt wird. Die innere Baugruppe 14 weist ein erstes Chassisteil 15 auf, in dem die Energiequelle 17 (in diesem Fall in Form einer Akkumulatorzelle) und die Antriebseinheit 18 aufgenommen ist. Die Kontrolleinrichtung 19 in Form einer elektrischen Platine, auf der die Steuerelektronik der Zahnbürste vorgesehen ist, ist in der Darstellung nach FIG. 2 nicht erkennbar, weil diese auf der rückwärtigen, gegenüberliegenden Seite angeordnet ist. Am oberen Ende der inneren Baugruppe 14 ist die Antriebswelle 20 angeordnet, die von der Antriebseinheit 18 in Bewegung versetzt wird. Die LED ist im oberen Abschnitt des zweiten Chassisteils 16 befestigt, wobei die elektrischen Verbindungsleitungen 21 zwischen der LED 10 und der Kontrolleinrichtung bzw. Platine 19 am zweiten Chassisteil vorgespannt befestigt sind. Das zweite Chassisteil weist eine ringförmige Umklammerung 22 auf, die um die Antriebswelle 20 herum und dessen Einfassung befestigt ist. Die Befestigung des zweiten Chassisteils nur an einem unteren Abschnitt an der Platine 19 über eine Schnappverbindung und am oberen Ende über die ringförmige Umklammerung 22 gewährleistet, dass die Vibrationen der Antriebseinheit 18 durch das zweite Chassisteil flexibel abgefedert werden und somit die elektrischen Zuleitungen der LED 10 und deren Verbindungen mit der Platine 19 nicht beschädigt werden.

Die FIG. 3 zeigt das zweite Chassisteil 16 mit der LED 10 und den elektrischen Zuleitungen 21 für sich. Das zweite Chassisteil 16 ist ein Kunststoffspritzgußteil, bevorzugt aus POM, und weist in seinem unteren Abschnitt zwei Klammerarme 23 mit Schnappnasen zur Befestigung an der Platine 19 auf. Abschnitt 24 zur Befestigung der LED ist besonders flexibel ausgestaltet, um in das zweite Chassisteil 16 eingeleitete Vibrationen abzufedern. Zur Abfederung tragen auch die ringförmige Umklammerung 22 und die untere Befestigungsweise an der Platine 19 bei. Ferner weist das zweite Chassisteil 16 mehrere Ausnehmungen auf und ist als schlankes Gerippe ausgebildet, so dass in sich eine starke Flexibilität gegeben ist. Alternativ zur LED können auch andere elektrische Bauteile an diesem flexibleren zweiten Chassisteil befestigt sein. Eine weitere Funktion des zweiten Chassisteils ist die Führung für die elektrischen Leitungen 21.

Es sei angemerkt, dass das Konzept eines flexiblen zweiten Chassisteils überall in solchen Geräten einsetzbar ist, wo ortsfeste, über Träger sich bewegende Schaltungen mit weiteren elektrischen Bauelementen verbunden werden sollen und diese Bauelemente durch z.B. Vibrationseinrichtungen oder Schwingantriebe voneinander getrennt sind bzw. unter deren Einfluss stehen. Die elektrischen Bauteile können somit mechanisch entkoppelt von den Antriebsbaugruppen z.B. zur Anzeige von Geräteinformationen durch LEDs und Displays oder zur Dateninformationsübertragung verwendet werden. Eine Anwendung in anderen elektrischen Zahnbürsten, Rasierapparaten oder Haushaltsgeräten ist ebenfalls möglich.

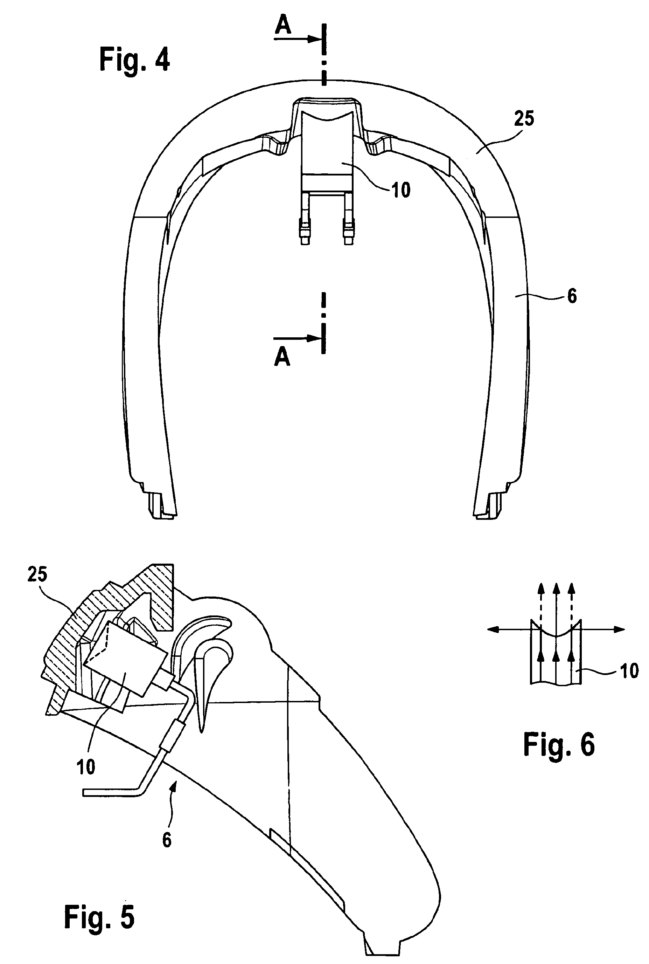

FIG. 4 zeigt eine Draufsicht auf die Lichtquelle 6. Die Lichtquelle 6 besteht aus dem Lichtleitelement 25 und der LED 10. Das Lichtleitelement 25 ist - wie bereits ausgeführt - im Gehäuse 13 des Handstücks 1 ausgebildet bzw. befestigt. Die LED 10 ist am zweiten Chassisteil 16 und damit an der inneren Baugruppe 14 vorgesehen und befestigt. Die LED 10 wird von einer Aufnahmeöffnung im Lichtleitelement 25 mit leichtem Abstand umgeben. Nach dem Einsetzen der inneren Baugruppe 14 in das Handstückgehäuse 13 befindet sich die LED in diesem Aufnahmeraum des Lichtleitelements 25. Das Lichtleitelement 25 weist eine grundsätzlich U-förmige, längliche Gestaltung auf und kann jedoch auch eine andere Erstreckung aufweisen, die bevorzugt in einem einstückigen Bauteil ein Bedecken zumindest einer Seite des Handstückgehäuses über dessen Breite erlaubt. In diesem Fall werden drei Seiten des Handstückgehäuses durch das Lichtleitelement umschlossen, wobei die Einleitung des Lichtes von der LED 10 in das Lichtleitelement 25 an der mittleren Stelle des Lichtleitelements, die in etwa ihrer Symmetrieachse entspricht, erfolgt.

FIG. 5 zeigt eine Schnittdarstellung durch das Lichtleitelement entlang der Linie A-A in Pfeilrichtung - siehe FIG. 4. Die LED 10 ist von mehreren Seiten des Lichtleitelementes 25 umgeben, so dass eine optimale Lichteinleitung in das Lichtleitelement 25 gegeben ist.

Die FIG. 6 zeigt schematisch die Lichtemission durch die LED 10. Das obere Ende des Strahlkörpers der LED 10 ist nicht nach außen konvex, sondern nach innen konvex gewölbt ausgebildet. Dadurch werden die nach oben von der LED ausgesandten Lichtstrahlen an dieser oberen, konvex nach innen gewölbten Fläche teils seitlich nach außen, aber auch teils senkrecht nach oben gestreut. Die Lichtstrahlen sind in FIG. 6 mit mehreren Pfeilen dargestellt. Durch diese Gestaltung der LED ergibt sich eine bessere Ausleuchtung des Lichtleitelementes auch zu den seitlichen Schenkeln des Lichtleitelementes 25 hin.

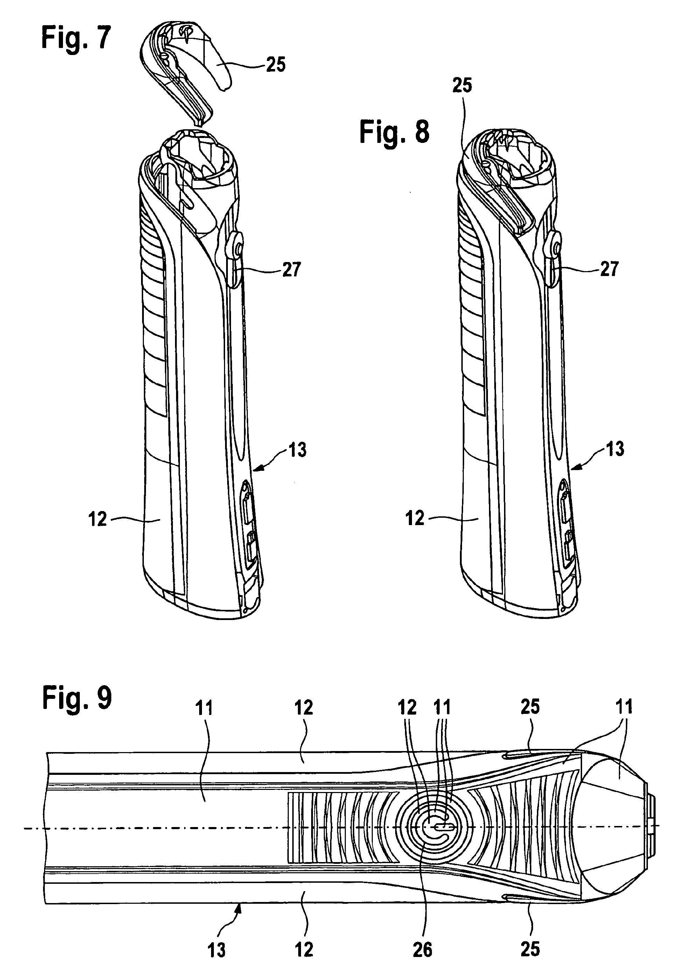

FIG. 7 zeigt das Gehäuse 13 des Handstücks 1. In FIG. 7 ist das Ergebnis nach dem ersten Spritzgußschritt dargestellt. Dieses rohrförmige Gehäuse ist ausschließlich durch eine Hartkunststoffkomponente, wie z.B. PP, gebildet. Oberhalb dieses Gehäuseteils 12 ist das Lichtleitelement 25 noch unmontiert dargestellt.

Die FIG. 8 zeigt den montierten Zustand des Lichtleitelementes 25 auf der Hartkunststoffkomponente 12 des Gehäuses 13. Nach diesem Montageschritt des Lichtleitelementes an der Hartkomponente des Gehäuses wird dieses erneut in das Spritzgußwerkzeug eingelegt und die Weichkomponente 11 am Gehäuse 13 aufgespritzt. Dabei umschließt der Weichkunststoff 11 das Lichtleitelement 25 an all seinen seitlichen Konturlinien, so dass dieses dichtend im Gehäuse 13 eingebettet ist.

Der Weichkunststoff erstreckt sich in diesem Fall ebenfalls über Abschnitte im vorderen Griffbereich, wobei der Gehäuseabschnitt des Schaltknopfes für den Betriebsschalter 5 teils aus der Hart- und teils aus der Weichkunststoffkomponente im 2-K Spritzgießen gebildet ist. Der Schaltknopf für den Betriebsschalter ist in einem ersten Spritzschritt mit einer Zunge 27 federnd als Hartkunststoffteil gespritzt (siehe Figuren 7 und 8) und dann im zweiten Spritzgußschritt mit Weichkunststoff derart ausgefüllt und eingebettet, dass die Zunge 27 elastisch nachgiebig auf einen in der inneren Baugruppe 14 liegenden Schalter andrückbar ist. Ferner wird durch den Weichkunststoff ein Schaltsymbol dargestellt. Somit erübrigt sich ein weiterer Bedruckungsvorgang zur Darstellung der Funktion dieses Schaltelementes. Die Ausbildung dieses Betriebsschalters und dessen Herstellung im Zweikomponenten-Spritzgußverfahren ist auch unabhängig von den übrigen Merkmalen oder in beliebiger anderer Kombination mit diesen beanspruchbar.

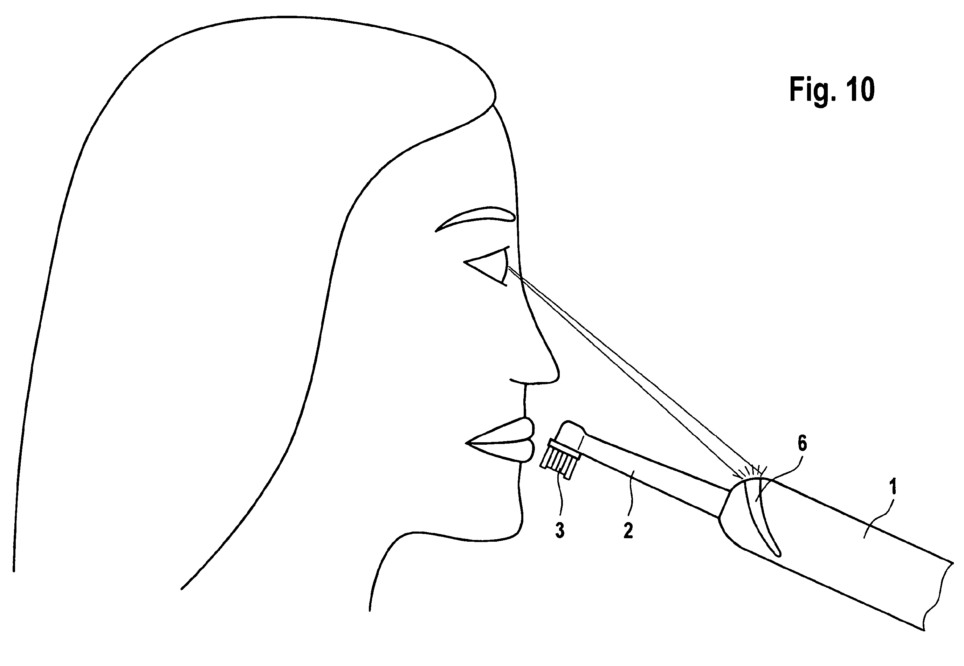

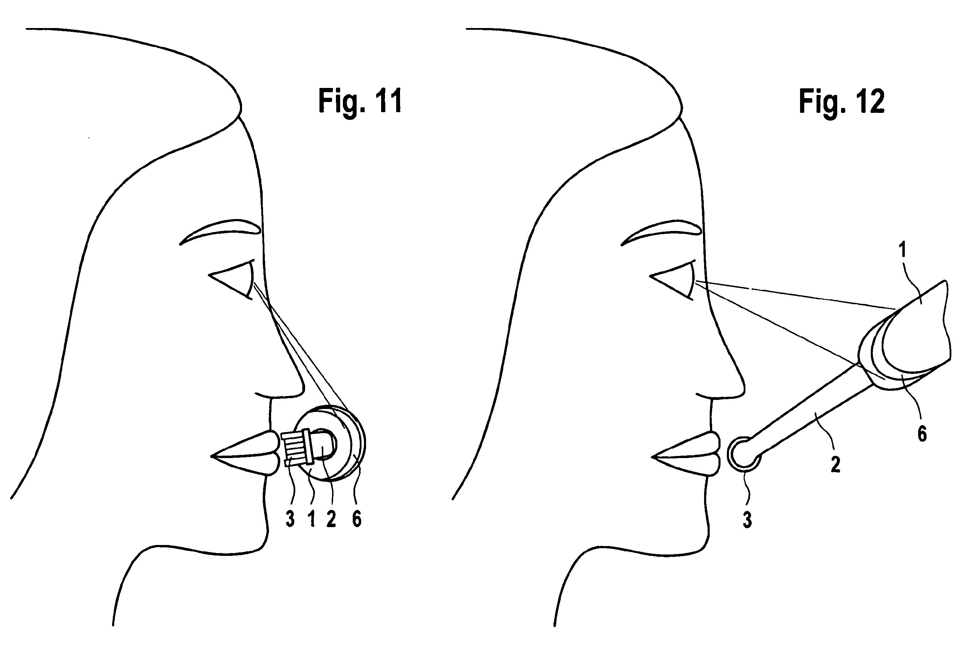

Die FIG. 10, FIG. 11 und FIG. 12 zeigen schließlich die Benutzung der elektrischen Zahnbürste durch einen Benutzer. Es sind exemplarisch drei Positionen der elektrischen Zahnbürste dargestellt, die während des Zähneputzens üblicherweise eingenommen werden. In allen zu handhabenden Zahnbürstenpositionen kann die Lichtquelle auch bei geschlossenen Augen des Benutzers eindeutig wahrgenommen werden, so dass auch in einer entspannten Zähneputzhaltung für den Benutzer ein Warnsignal wahrnehmbar ist, dass der Druck auf die Zähne verringert werden sollte.

## Patentansprüche

1. Elektrische Zahnbürste mit einem Reinigungskopf, einem Handstück (1) und einem Hals (2), der zwischen Reinigungskopf (3) und Handstück (1) angeordnet ist, wobei das Handstück ein Gehäuse (13) mit einem Betriebsschalter (5), eine Energiequelle (17), eine Antriebseinheit (18), eine Kontrolleinrichtung (19) und eine Lichtquelle (6) aufweist, wobei die Lichtquelle (6) von der Kontrolleinrichtung (19) bei Erreichen eines vordefinierten Betriebszustandes aktivierbar ist und wobei die Lichtquelle (6) in einem oberen Bereich des Handstücks zwischen dem Betriebsschalter und dem Hals (2) angeordnet ist, **dadurch gekennzeichnet, dass** die Lichtquelle (6) derart ausgebildet ist, dass die von dieser emittierten Lichtintensität 50-2500 µW/sr und/oder die Lichtstärke 20-500 mcd beträgt.

2. Elektrische Zahnbürste nach dem vorhergehenden Anspruch, **dadurch gekennzeichnet, dass** die Lichtquelle derart ausgebildet ist, dass die von der Lichtquelle emittierte Lichtintensität 150-2000 µW/sr und/oder die Lichtstärke 100-450 mcd beträgt.

3. Elektrische Zahnbürste nach den vorhergehenden Ansprüchen, **dadurch gekennzeichnet, dass** die optische Achse (7) der Lichtquelle, insbesondere einer LED (10) der Lichtquelle, mit der Antriebsachse (8) der Antriebseinheit einen spitzen Winkel von vorzugsweise 0 bis 80°, insbesondere 30 bis 60°, einschließt.

4. Elektrische Zahnbürste nach den vorhergehenden Ansprüchen, **dadurch gekennzeichnet, dass** als Lichtquelle eine LED und ein Lichtleitelement vorgesehen ist.

5. Elektrische Zahnbürste nach den vorhergehenden Ansprüchen, **dadurch gekennzeichnet, dass** die Lichtquelle (6), insbesondere die LED, auf der zum Betriebsschalter (5) gegenüberliegende Seiten des Gehäuses (13) angeordnet ist.

6. Elektrische Zahnbürste nach den vorhergehenden Ansprüchen, **dadurch gekennzeichnet, dass** das Lichtleitelement als transparenter oder transluzenter Kunststoffkörper ausgebildet ist.

7. Elektrische Zahnbürste nach den vorhergehenden Ansprüchen, **dadurch gekennzeichnet, dass** das Lichtleitelement als länglich gekrümmter Körper, vorzugsweise mit U- oder Bananenform, ausgebildet ist.

8. Elektrische Zahnbürste nach den vorhergehenden Ansprüchen, **dadurch gekennzeichnet, dass** der optische Strahlkörper der LED teils eine nach innen geformte Kontur aufweist.

9. Elektrische Zahnbürste nach den vorhergehenden Ansprüchen, **dadurch gekennzeichnet, dass** die LED an einer inneren Baugruppe des Handstücks befestigt und /oder zum Gehäuse unbefestigt ist.

10. Elektrische Zahnbürste nach den vorhergehenden Ansprüchen, **dadurch gekennzeichnet, dass** die innere Baugruppe ein erstes und ein zweites Chassisteil aufweist, wobei das erste Chassisteil die Energiequelle, die Antriebseinheit und die Kontrolleinrichtung aufnimmt und das zweite Chassisteil die LED und eine elektrische Leitung zur LED aufweist.

11. Elektrische Zahnbürste nach den vorhergehenden Ansprüchen, **dadurch gekennzeichnet, dass** das zweite Chassisteil an einer elektrischen Leiterplatte der Kontrolleinrichtung mechanisch und elektrisch verbindbar ist.

12. Elektrische Zahnbürste nach den vorhergehenden Ansprüchen, **dadurch gekennzeichnet, dass** die LED an einem Kunststoffspritzgußteil, das als zweites Chassisteil vorgesehen ist, befestigt ist.

13. Elektrische Zahnbürste nach den vorhergehenden Ansprüchen, **dadurch gekennzeichnet, dass** das zweite Chassisteil eine ringförmige Umklammerung der Antriebseinheit als oberes Befestigungsmittel an der inneren Baugruppe aufweist.

14. Elektrische Zahnbürste nach den vorhergehenden Ansprüchen, **dadurch gekennzeichnet, dass** der Lichtquelle, insbesondere das Lichtleitelement, von einem Weichkunststoff eingegrenzt ist.

15. Verfahren zur Herstellung einer elektrischen Zahnbürste nach einem der vorangegangenen Ansprüche, **gekennzeichnet durch** die Herstellschritte:
- Spritzgießen einer ersten Kunststoffkomponente des Gehäuses;
- Montieren der Lichtquelle oder eines Lichtleitelements an der ersten Kunststoffkomponente;
- Spritzgießen einer zweiten Kunststoffkomponente des Gehäuses benachbart zur Lichtquelle oder des Lichtleitelements.

16. Verfahren zur Herstellung einer elektrischen Zahnbürste nach Anspruch 15, **dadurch gekennzeichnet, dass** die erste Kunststoffkomponente als Hartkunststoff und die zweite Kunststoffkomponente als Weichkunststoff gespritzt wird.

17. Verfahren zur Herstellung einer elektrischen Zahnbürste nach einem der vorangegangen Ansprüche, **gekennzeichnet durch** die Herstellschritte:
- Spritzgießen des Gehäuses mit Anbringen eines Lichtleitelements der Lichtquelle;
- Einsetzen einer inneren Baugruppe mit Antriebseinheit, Energiequelle und einer LED Lichtquelle in das Gehäuse.

## Claims

1. An electric toothbrush having a cleaning head, a handpiece (1) and a neck (2) arranged between the cleaning head (3) and the handpiece (1), wherein the handpiece has a housing (13) with an operating switch (5), an energy source (17), a drive unit (18), a control device (19), and a light source (6), wherein the light source (6) is activatable by the control device (19) when a predefined operating state is reached, and wherein the light source (6) is arranged in an upper area of the handpiece between the operating switch and the neck (2), **characterized in that** the light source (6) is configured such that the light intensity emitted by the light source is 50-2500 µW/sr and/or the luminous intensity is 20-500 mcd.

2. The electric toothbrush according to the preceding claim, **characterized in that** the light source is configured such that the light emitted by the light source has a light intensity of 150-2000 µW/sr and/or a luminous intensity of 100-450 mcd.

3. The electric toothbrush according to the preceding claims, **characterized in that** the optical axis (7) of the light source, in particular an LED (10) of the light source, forms with the drive axis (8) of the drive unit an acute angle of preferably 0 to 80°, in particular 30 to 60°.

4. The electric toothbrush according to the preceding claims, **characterized in that** a light source is provided in the form of an LED and a light guide element.

5. The electric toothbrush according to the preceding claims, **characterized in that** the light source (6), in particular the LED, is arranged on the side of the housing (13) opposite the operating switch (5).

6. The electric toothbrush according to the preceding claims, **characterized in that** the light guide element is in the form of a transparent or translucent plastic body.

7. The electric toothbrush according to the preceding claims, **characterized in that** the light guide element is in the form of an elongated curved body, preferably U-shaped or banana-shaped.

8. The electric toothbrush according to the preceding claims, **characterized in that** the optical radiating body of the LED has a partly inwardly shaped contour.

9. The electric toothbrush according to the preceding claims, **characterized in that** the LED is fastened to an inner component of the handpiece and/or is detached from the housing.

10. The electric toothbrush according to the preceding claims, **characterized in that** the inner module has a first and a second chassis part, wherein the first chassis part accommodates the energy source, the drive unit, and the control device, and the second chassis part accommodates the LED and the electric lead to the LED.

11. The electric toothbrush according to the preceding claims, **characterized in that** the second chassis part is mechanically and electrically connectable to an electric printed circuit board of the control device.

12. The electric toothbrush according to the preceding claims, **characterized in that** the LED is fastened to a plastic injection molded part, which is provided as the second chassis part.

13. The electric toothbrush according to the preceding claims, **characterized in that** the second chassis part has an annular clasp that embraces the drive unit and acts as an upper fastening means on the inner component.

14. The electric toothbrush according to the preceding claims, **characterized in that** the light source, in particular the light guide element, is bounded by a soft plastic material.

15. Method of manufacturing an electric toothbrush according to any one of the preceding claims, **characterized by** the manufacturing steps of:
- injection molding a first plastic component of the housing;
- mounting the light source or a light guide element on the first plastic component;
- injection molding a second plastic component of the housing adjacent to the light source or the light guide element.

16. Method of manufacturing an electric toothbrush according to claim 15, **characterized in that** the first plastic component is injection molded in the form of a hard plastic material and the second component in the form of a soft plastic material.

17. Method of manufacturing an electric toothbrush according to any one of the preceding claims, **characterized by** the manufacturing steps of:
- injection molding the housing including fitting of a light guide element of the light source;
- inserting into the housing an inner module with drive unit, energy source, and an LED of the light source.

## Revendications

1. Brosse à dents électrique comprenant une tête de nettoyage, une pièce à main (1) et un col (2), qui est disposé entre la tête de nettoyage (3) et la pièce à main (1), la pièce à main présentant un boîtier (13) doté d'un interrupteur de fonctionnement (5), une source d'énergie (17), une unité d'entraînement (18), un dispositif de contrôle (19) et une source lumineuse (6), la source lumineuse (6) pouvant être activée par le dispositif de contrôle (19) lorsqu'un état de fonctionnement prédéfini est atteint et la source lumineuse (6) étant disposée dans une zone supérieure de la pièce à main entre l'interrupteur de fonctionnement et le col (2), **caractérisée en ce que** la source lumineuse (6) est conçue de manière telle que l'éclairement émis par celle-ci est de 50-2500 µW/sr et/ou l'intensité lumineuse est de 20-500 mcd.

2. Brosse à dents électrique selon la revendication précédente, **caractérisée en ce que** la source lumineuse est conçue de manière telle que l'éclairement est de 150-2000 µW/sr et/ou l'intensité lumineuse est de 100-450 mcd.

3. Brosse à dents électrique selon les revendications précédentes, **caractérisée en ce que** l'axe optique (7) de la source lumineuse, en particulier d'une DEL (10) de la source lumineuse, forme un angle aigu de préférence de 0 à 80°, en particulier de 30 à 60°, avec l'axe d'entraînement (8) de l'unité d'entraînement.

4. Brosse à dents électrique selon les revendications précédentes, **caractérisée en ce qu'**une DEL et un élément conducteur de lumière sont prévus comme source lumineuse.

5. Brosse à dents électrique selon les revendications précédentes, **caractérisée en ce que** la source lumineuse (6), en particulier la DEL, est disposée sur le côté du boîtier (13) qui est opposé à l'interrupteur de fonctionnement (5).

6. Brosse à dents électrique selon les revendications précédentes, **caractérisée en ce que** l'élément conducteur de lumière est conçu sous forme de corps en plastique transparent ou translucide.

7. Brosse à dents électrique selon les revendications précédentes, **caractérisée en ce que** l'élément conducteur de lumière est conçu comme un corps courbé et oblong, de préférence en forme de U ou de banane.

8. Brosse à dents électrique selon les revendications précédentes, **caractérisée en ce que** le corps de rayonnement optique de la DEL présente en partie un contour formé vers l'intérieur.

9. Brosse à dents électrique selon les revendications précédentes, **caractérisée en ce que** la DEL est fixée à un ensemble intérieur de la pièce à main et/ou n'est pas fixée par rapport au boîtier.

10. Brosse à dents électrique selon les revendications précédentes, **caractérisée en ce que** l'ensemble intérieur présente une première et une seconde parties de châssis, la première partie de châssis logeant la source d'énergie, l'unité d'entraînement et le dispositif de contrôle et la seconde partie de châssis incluant la DEL et une ligne électrique menant à la DEL.

11. Brosse à dents électrique selon les revendications précédentes, **caractérisée en ce que** la seconde partie de châssis peut être reliée mécaniquement et électriquement à une carte de circuit imprimé du dispositif de contrôle.

12. Brosse à dents électrique selon les revendications précédentes, **caractérisée en ce que** la DEL est fixée à une pièce moulée par injection plastique qui est prévue en tant que seconde pièce de châssis.

13. Brosse à dents électrique selon les revendications précédentes, **caractérisée en ce que** la seconde pièce de châssis présente un enserrage annulaire de l'unité d'entraînement servant de moyen de fixation supérieur à l'ensemble intérieur.

14. Brosse à dents électrique selon les revendications précédentes, **caractérisée en ce que** la source lumineuse, en particulier l'élément conducteur de lumière, est délimitée par un plastique souple.

15. Procédé de fabrication d'une brosse à dents électrique selon le préambule de la revendication 1 ou l'une des revendications précédentes, **caractérisé par** les étapes de fabrication suivantes :
- moulage par injection d'un premier composant en plastique du boîtier ;
- montage de la source lumineuse ou d'un élément conducteur de lumière sur le premier composant en plastique ;
- moulage par injection d'un second composant en plastique du boîtier à proximité de la source lumineuse ou de l'élément conducteur de lumière.

16. Procédé de fabrication d'une brosse à dents électrique selon la revendication 15, **caractérisé en ce que** le premier composant en plastique est moulé par injection de plastique dur et le second composant en plastique est moulé par injection de plastique souple.

17. Procédé de fabrication d'une brosse à dents électrique selon l'une des revendications précédentes, **caractérisé par** les étapes de fabrication suivantes :
- moulage par injection du boîtier avec montage d'un élément conducteur de lumière de la source lumineuse ;
- insertion, dans le boîtier, d'un groupe intérieur comprenant une unité d'entraînement, une source d'énergie et une source lumineuse à DEL.
